## Europäisches Patentamt

## European Patent Office

## Office européen des brevets

(11) Numéro de publication: **0 242 256**
**B1**

(12) **FASCICULE DE BREVET EUROPEEN**

(45) Date de publication du fascicule du brevet:
**04.07.90**

(21) Numéro de dépôt: **87400639.8**

(22) Date de dépôt: **23.03.87**

(51) Int. Cl.⁵: **G01V 11/00, E21B 47/00,**
**E21B 19/22, E21B 21/00,**
**E21B 33/068**

(54) Procédé et dispositif pour effectuer des mesures caractérisant des formations géologiques, dans un forage horizontal réalisé depuis une voie souterraine.

(30) Priorité: **04.04.86 FR 8604960**

(43) Date de publication de la demande:
**21.10.87 Bulletin 87/43**

(45) Mention de la délivrance du brevet:
**04.07.90 Bulletin 90/27**

(84) Etats contractants désignés:
**DE GB IT NL**

(56) Documents cités:
**GB-A- 2 094 375**
**GB-A- 2 157 746**
**US-A- 3 285 629**
**US-A- 3 777 827**
**US-A- 4 495 992**
**US-A- 4 498 532**

(73) Titulaire: **INSTITUT FRANCAIS DU PETROLE, 4, Avenue de Bois-Préau, F-92502 Rueil-Malmaison(FR)**

(72) Inventeur: **Wittrisch, Christian, 24, rue George Sand, F-92500 Rueil-Malmaison(FR)**

## Description

La présente invention a pour objet un procédé et un dispositif pour effectuer des mesures caractérisant des formations géologiques dans un forage horizontal ou à faible inclinaison sur l'horizontale, réalisé depuis une voie souterraine, telle qu'une galerie, un tunnel etc.

Le dispositif selon l'invention trouve son application notamment dans l'étude des terrains où des galeries ou tunnels sont et cours de percement, de manière à faciliter l'avancement des systèmes de taille utilisés.

On connaît un dispositif utilisé dans les mines de charbon pour explorer les terrains en avant d'une galerie en cours de réalisation dans le but de bien délimiter les contours d'une veine et de localiser préalablement au minage les poches de gaz susceptibles d'exploser. Ce dispositif comporte une machine de forage à l'horizontale constituée essentiellement d'un outil de forage fixé à l'extrémité d'une tige creuse, un système d'entraînement de la tige, et un dispositif de mesure constitué d'une sonde de section inférieure à celle de la tige de forage, fixée à l'extrémité d'un câble sur la transmission des données mesurées par la sonde.

Un trou ayant été foré, la sonde est introduite dans la tige de forage et poussée jusqu'à l'extrémité de la tige par des moyens de pompage. Ce dispositif antérieur fait l'objet du brevet US nº 4.498.532.

Ce type de dispositif se prête bien aux investigations effectuées au moyen de sondes pouvant fonctionner à l'intérieur d'un tube ou d'une tige généralement métallique et donc aux sondes à royannement : rayons gamma, neutrons dont le pouvoir de pénétration est très limité. L'enfoncement de la sonde dans les terrains est limité à la longueur relativement faible du tube sauf si celui-ci est constitué d'un train de tiges que l'on raccorde les unes aux autres au fur et à mesure.Mais dans ce cas, l'étape préalable permettant de conduire la sonde au fond d'un forage de plusieurs centaines de mètres est très longue et cela retarde considérablement la réalisation effective des mesures. En outre, l'obligation dans la phase de retrait de démonter les sections successives du train de tiges, impose des arrêts de progression et la réalisation de mesures continues est impossible.

Un autre procédé connu consiste à fixer une sonde à l'extrémité d'une tige possédant une sortie latérale et à raccorder les connecteurs électriques de la sonde à un câble que l'on fait passer à l'extérieur, au travers de cette sortie latérale. La tige munie de sa sonde, est engagée dans le forage et au fur et à mesure de son enfoncement, on rajoute des sections de tube et l'on déroule le câble. Aux inconvénients déjà notés tenant à la lenteur des opérations de raccordement des sections de tube, on peut ajouter que la présence du câble à l'extérieur complique beaucoup la réalisation d'un manchon de fermeture étanche du forage sans lequel celui-ci ne peut être rempli du liquide nécessaire au couplage avec les terrains d'une sonde de mesure acoustique par exemple.

Le procédé selon l'invention qui est adapté à la réalisation de mesures dans des formations géologiques depuis un forage horizontal ou à inclinaison limitée par rapport à l'horizontale, évite les inconvénients ci-dessus mentionnés. Il est caractérisé en ce qu'il comporte la fixation d'une sonde contenant des instruments de mesure, à un élément allongé adapté à être enroulé sur une touret de stockage, l'introduction de la sonde dans le forage et le déplacement linéaire depuis la voie souterraine, de l'élément allongé déroulé du touret de stockage, ledit élément allongé étant suffisamment rigide pour entraîner la sonde le long du forage, le réalisation au course de son déplacement, de cycles continus de mesures, et le réenroulage de l'élément allongé sur le touret de stockage au fur et à mesure du retrait de la sonde.

L'utilisation d'un élément allongé enroulable et de moyens d'entraînement assurant le déroulage et l'enfoncement de cet élément tout le long d'un forage sur une distance pouvant atteindre plusieurs centaines de mètres, jusqu'à ce que la sonde atteigne la profondeur choisie pour les mesures, et ensuite son réenroulage sur un touret de stockage, permettent d'effectuer rapidement une reconnaissance préalable des terrains en avant d'un front de taille. Cet avantage est particulièrement appréciable compte tenu de la rapidité d'avancement des engins modernes utilisés pour le creusement des tunnels ou galeries. Un autre avantage important tient au fait que le déroulage ou l'enroulage de l'élément allongé étant effectué sans aucune interruption, on peut réaliser des mesures de manière continue tout le long du forage.

D'autres caractéristiques et avantages du dispositif apparaîtront à la lecture de la description d'un mode de réalisation donné à titre d'exemple non limitatif, en se référant aux dessins annexés où :

- la figure 1 est une vue d'ensemble schématique du dispositif au cours d'une opération d'enroulage ou de déroulage de l'élément allongé;
- la figure 2 montre un élément d'étanchéïté permettant de remplir le forage de fluide pendant toute la phase de réalisation des mesures;
- la figure 3 montre la partie terminale de l'élément allongé et la sonde qui y est fixée; et
- la figure 4 représente un collecteur hydraulique et électrique tournant permettant la mise en communciation de l'intérieur de l'élément allongé avec un ensemble de pompage de fluide et l'interconnexion de câbles électriques courant le long de l'élément avec des moyens d'alimentation électrique et de collecte des données de mesure.

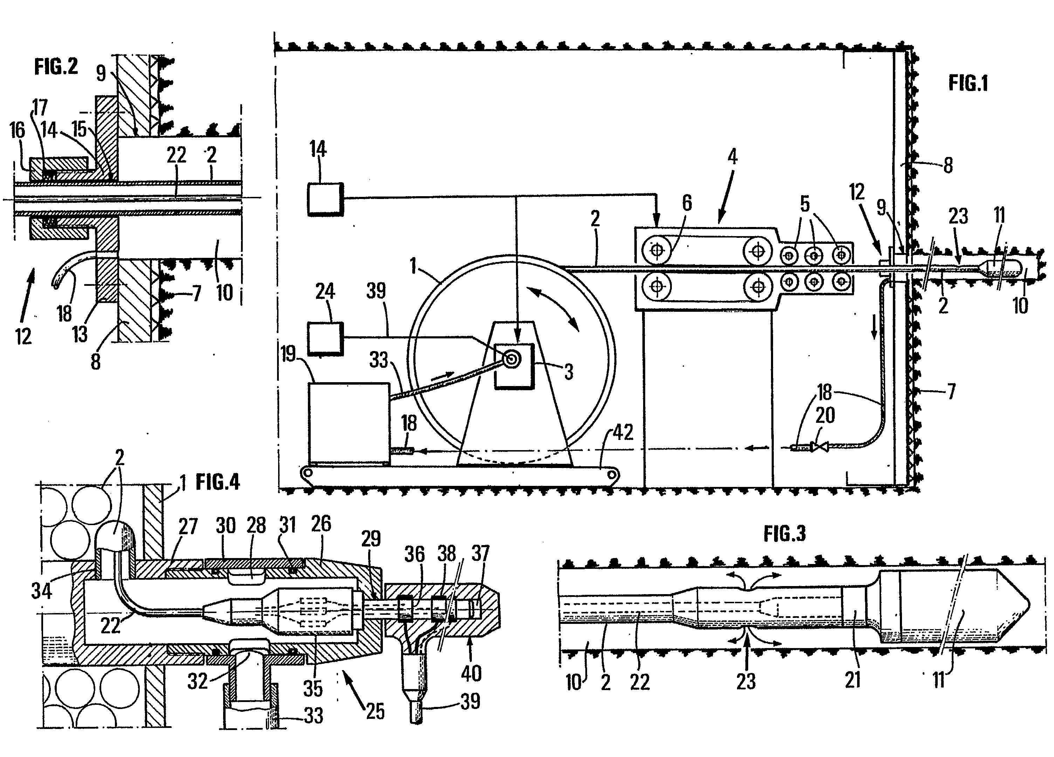

Si l'on se reporte à la figure 1, on voit que le dispositif comporte un touret de stockage 1 sur lequel est enroulé un élément allongé constitué par exemple d'un tube semi-rigide 2 d'un type connu. Le touret est entraîné par un moteur hydraulique 3. Le tube 2 déroulé du touret 1, passe dans un dispositif d'entraînement 4. Celui-ci comporte par exemple deux rangées de galets alignés 5 destinés à le redresser, des chenilles d'entraînement 6 mues par un moteur hydraulique (non représenté) ainsi que des moyens de comptage pour déterminer la longueur du tube introduite dans le forage.

Les machines utilisées pour le percement des galeries ou tunnels 7, comportent généralement un bouclier 8 dans lequel sont ménagés de nombreux orifices pour différents outils et notamment des outils de forage. Par l'un de ces orifices (9) est introduit l'outil d'un système de forage adapté à creuser un trou 10 pouvant atteindre plusieurs centaines de mètres et de diamètre suffisant pour y introduire une sonde de mesure 11 contenant des instruments de mesure appropriés. Le trou ayant été foré, on adapte sur l'orifice 9 du bouclier 8, un élément d'étanchéité 12 du type presse-étoupe comportant (Fig. 2) une plaque 13 comprenant une partie centrale cylindrique 14 pourvue d'un alésage central 15 de section adaptée à celle du tube 2. Sur cette partie centrale 14 vient se visser un couvercle 16 pourvu d'un passage de section adaptée également à celle du tube. Un disque 17 réalisé en un matériau déformable est disposé entre la partie centrale 14 et le couvercle 16 et, comprimé par le vissage du couvercle, vient s'appliquer étroitement autour du tube. Des moyens de fixation (non représentés) permettant de fixer la plaque 13 au bouclier 8. La plaque 13 comporte un orifice sur lequel on adapte une canalisation 18 reliée (Fig. 1) à un système de pompage de fluide 19 par l'intermédiaire d'une vanne 20.

La sonde 11 est fixée à l'extrémité du tube 2 par un connecteur étanche 21 (Fig. 3). Par ce connecteur, les instruments de mesures contenus dans la sonde, sont raccordés avec les conducteurs d'un câble multi-conducteurs 22 courant tout le long du tube 2. Des lumières 23 sont percées au voisinage du connecteur 21 dans la paroi du tube 2, pour faire communiquer l'intérieur de celui-ci avec le forage 10. La section de la sonde est généralement supérieure à celle du tube 2.

A son extrémité opposée, le tube communique avec le système de pompage 19 et avec un dispositif de commande et d'enregistrement 24 (Fig. 1), par l'intermédiaire d'un collecteur hydraulique et électrique tournant 25 (Fig. 4).

Le collecteur 25 comporte une tige creuse 26 qui est fixée au moyeu 27 du touret 1. Sa paroi latérale est pourvue de lumières 28 et son extrémité opposée au touret, d'un alésage 29. La partie de la tige pourvue des lumières 28, est engagée à l'intérieur d'une bague fixe 30. Des joints 31 établissent l'étanchéité entre la tige 26 et la bague 30. Une ouverture radiale 32 de la bague fait communiquer l'intérieur de la tige 26 et une canalisation 33 reliée au système de pompage 29. L'extrémité du tube 2 opposée à la sonde, est engagée dans un orifice radial 34 ménagé dans le moyeu 27 du touret.

Les différents conducteurs du câble multi-conducteurs 22 logé dans le tube 2, sont connectés, par l'intermédiaire d'un élément d'étanchéité 35 fermant l'alésage 29, à différents contacts 36 à la périphérie de la partie mâle 37 tournant avec le moyeu du touret, d'un connecteur électrique. Différentes bagues collectrices 38 de la partie femelle fixe 40 du connecteur électrique, permettant, par l'intermédiaire d'un câble 39, de relier électriquement les différents conducteurs du câble 22 au système de commande et d'enregistrement 24 (Fig. 1). La tige 26 et la bague 30 associées, permettant d'établir une circulation de fluide entre le tube 2 et le système de pompage 19.

Un élément de synchronisation 41 contrôle le moteur hydraulique d'entraînement des chenilles 6 et le moteur 3, de manière à maintenir égales la vitesse d'avancement linéaire du tube redressé et la vitesse de rotation du touret 1.

Le touret 1, son support, le moteur hydraulique 3 ainsi que le système de pompage 19 sont avantageusement disposés sur un traîneau 42 qui est déplacé le long de la galerie 7 au fur et à mesure de son avancement. Le dispositif fonctionne de la manière suivante :

- Un trou de section et de longueur appropriées ayant été foré en avant du bouclier 8, on y engage la sonde de mesure 11. Après son passage au travers du dispositif d'entraînement 4 et des galets de redressement 5, on enfile l'extrémité du tube 2 déroulé du touret 1, au travers de l'élément d'étanchéité 12 (Fig. 2) et on le raccorde à la sonde. L'élément d'étanchéité 12 ayant été fixé au bouclier 8, on actionne le dispositif d'entraînement 4 de manière à faire avancer dans le forage le tube 2 et la sonde 11 qui lui est solidaire.

- Ce mouvement se poursuit sans interruption jusqu'à ce que la sonde atteigne la profondeur requise. Les moyens de comptage du dispositif d'entraînement 4, permettant de connaître la profondeur du tube 2 enfoncé dans le forage.

- Lorsqu'un bon couplage entre la sonde et les formations environnantes est nécessaire, on procède au remplissage du trou foré avec le fluide fourni par le système de pompage 19. Pour chasser les poches d'air qui peuvent se former dans l'espace annulaire autour du tube, on peut établir une circulation d'eau par l'intermédiaire du circuit hydraulique 18, 20, 33, 2, 23. On utilise avantageusement un dispositif de pompage capable d'établir dans le circuit, une circulation de fluide dans un sens ou dans le sens opposé. Ceci permet de s'adapter à l'inclinaison du forage par rapport à l'horizontale. Si le forage est ascendant, les poches d'air sont chassées plus facilement en injectant du fluide par la canalisation 18, le retour au système de pompage 19 s'effectuant par l'intérieur du tube 2. Si au contraire le forage est descendant, on injecte le fluide par l'intérieur du tube 2, le retour s'effectuant par l'intermédiaire de la canalisation 18.

Le trou ayant été convenablement rempli de fluide et étant maintenu en pression si nécessaire, on actionne la sonde et l'on procède aux opérations de rembobinage du tube 2 sur le touret 1, ces deux actions pouvant être menées simultanément de manière à effectuer des mesures continues tout le long du forage. On peut également les mener alternativement de manière à obtenir un ensemble discontinu de mesures.

Les données recueillies sont transférées au dispositif de commande et d'enregistrement 24 (Fig. 1), par l'intermédiaire du câble 22. La position exacte de la sonde à l'intérieur du forage est connue à chaque instant par les moyens de comptage du système d'entraînement 4.

Lorsque toutes les données de mesure ont été enregistrées, on démonte l'élément d'étanchéïté 12 et l'on extrait la sonde de l'orifice 9 qui peut être de nouveau utilisé pour les opérations de perçage du tunnel ou de la galerie.

Les données enregistrées permettent d'établir une représentation des terrains à percer et donc d'optimiser le déroulement des opérations de perçage.

On ne sortirait pas du cadre de l'invention, en remplaçant les chenilles d'entraînement du tube semi-rigide par tout moyen équivalent tel qu'un ensemble motorisé de galets ou de rouleaux.

De la même façon on peut remplacer le tube semi-rigide par tout élément allongé enroulable sur un touret de stockage et assez rigide pour transmettre à la sonde les efforts nécessaires à son enfoncement. Il peut s'agir par exemple d'un câble classique de diagraphie éventuellement rigidifié par des armures extérieures, l'ensemble pouvant être revêtu d'une gaine de protection.

## Revendications

1. - Procédé pour effectuer des mesures dans des formations géologiques depuis un forage horizontal ou à inclinaison limitée sur l'horizontale, réalisé dans la paroi d'une voie souterraine, caractérisé en ce qu'il comporte la fixation d'une sonde (11) contenant des instruments de mesure à un élément allongé (2) adapté à être enroulé sur un touret de stockage (1), l'introduction de la sonde dans le forage, et le déplacement linéaire depuis la voie souterraine, de l'élément allongé déroulé du touret de stockage, ledit élément allongé étant suffisamment rigide pour entraîner la sonde le long du forage, la réalisation au cours de son déplacement le long du forage, de cycles continus de mesure, et le réenroulage de l'élément allongé sur le touret de stockage au fur et à mesure de retrait de la sonde (10).

2.- Dispositif pour effectuer des mesures dans des formations géologiques depuis un forage horizontal ou à faible inclinaison sur l'horizontale effectué dans la paroi d'une voie souterraine (7) comportant une sonde (11) contenant des instruments de mesure adaptés à être introduite dans le forage, caractérisé en ce qu'il comporte un élément allongé (2) adapté à être enroulé sur un touret de stockage (1), la sonde étant assujettie audit élément allongé, des moyens d'entraînement (4) disposés entre le support circulaire et l'orifice du forage, pour déplacer linéairement à l'intérieur de celui-ci l'élément allongé déroulé du touret de stockage et la sonde associée, des moyens d'étanchéïté (12) adaptables à l'orifice du forage (19) pour isoler de la voie souterraine l'intérieur du forage et un système de pompage de fluide permettant d'assurer le remplissage du forage (10).

3. - Dispositif selon la revendication 2, caractérisé en ce que les moyens d'entraînement (4) comportent un ensemble de galets alignés suivant une direction commune pour le guidage de l'élément allongé et des moyens moteurs pour entraîner en rotation des galets dudit ensemble.

4. - Dispositif selon la revendication 2, caractérisé en ce que le touret de stockage est pourvu de moyens de connexion tournants pour relier l'élément allongé à des appareils extérieurs.

5. - Dispositif selon la revendication 4, caractérisé en ce qu'un câble de transmission (22) relié aux instruments de mesure de la sonde, passe à l'intérieur de l'élément allongé, les moyens de connexion tournants comportant un collecteur électrique tournant (36-39) pour relier le câble de transmission à un système électronique de commande et d'enregistrement (24).

6. - Dispositif selon la revendication 5, caractérisé en ce que les moyens de connexion comportent un collecteur hydraulique tournant (26-32) permettant de relier l'intérieur de l'élément allongé au système de pompage de fluide (19).

7. - Dispositif selon la revendication 2, caractérisé en ce que les moyens d'entraînement comportent des chenilles (6) mues par des moyens moteurs et un ensemble de galets (5) pour le redressement de l'élément allongé déroulé dudit touret (1).

8. - Dispositif selon la revendication 2, caractérisé en ce que les moyens d'étanchéïté (12) comportent une plaque (13) adaptée à venir clore l'ouverture du trou foré, cette plaque comportant un passage (15) pour ledit élément allongé, et un élément (16) pour l'application d'un joint d'étanchéïté (17) autour de l'élément allongé (2).

9. - Dispositif selon la revendication 8, caractérisé en ce que le système de pompage de fluide (19) est relié avec l'intérieur du trou foré par une canalisation (18) adaptée à un orifice de la plaque (13).

10. - Dispositif selon la revendication 9, caractérisé en ce que la canalisation (18) est pourvue d'une vanne (20) pour faire communiquer par intermittence l'intérieur du forage avec le système de pompage (19) l'élément allongé (2)j comportant des ouvertures (23) faisant communiquer l'intérieur de l'élément allongé avec le forage (10).

11. - Dispositif selon la revendication 2, caractérisé en ce que l'élément allongé (2) est un tube semi-rigide.

12. - Dispositif selon la revendication 2, caractérisé en ce que l'élément allongé (2) est un câble.

## Claims

1. Method of carrying out measurements in geological formations from a drilling which is horizontal or at a small angle to the horizontal, carried out in the wall of an underground passage, by means of a probe (11) containing measuring instruments connected to a transmission cable (22), characterised in that it comprises the fixing of the probe (11) to a long element (2) suitable for being coiled on a cable storage drum (1), and inside which the transmission cable passes, the introduction of the probe into the drilling, and the linear movement from the underground passage of the long element (2) unwound from the cable storage drum (1), the said long element being sufficiently rigid to drive the probe along the drilling, the carrying out of continuous measuring cycles during its movement along the drilling, and the rewinding of the long element onto the cable storage drum as the probe (11) is withdrawn.

2. Device for carrying out measurements in geological formations from a drilling (10) which is horizontal or at a small angle to the horizontal, carried out in the wall of an underground passage (7), comprising a probe (11) suitable for being introduced into the drilling, the probe containing measuring instruments connected to a transmission cable (22), characterised in that it comprises a long element (2) suitable for being coiled on a cable storage drum (1), the probe being secured to the said long element, and the transmission cable passing inside the latter, means of driving (4) disposed between the circular support and the orifice of the drilling, in order to move linearly inside the latter the long element (2) unwound from the cable storage drum (1) and the attached probe (11), means of sealing (12) adjustable to the orifice of the drilling (10) to isolate the inside of the drilling from the underground passage and a fluid pumping system (19) enabling the drilling to be filled (10).

3. Device as claimed in claim 2, characterised in that the means of driving (4) comprise an assembly of rollers aligned in the same direction for guiding the long element and motive means for rotating the rollers of the said assembly.

4. Device as claimed in claim 2, characterised in that the storage cable drum is provided with rotating means of connection to connect the transmission cable (22) to external equipment (24).

5. Device as claimed in claim 4, characterised in that the rotating means of connection comprise a rotating electrical commutator (36–38) to connect the transmission cable (22) to a cable (39) connected to an electronic control and recording system (24).

6. Device as claimed in claim 5, characterised in that the means of connection comprise a rotating hydraulic manifold (26–32) enabling the inside of the long element (2) to be connected to the fluid pumping system (19).

7. Device as claimed in claim 2, characterised in that the means of driving comprise caterpillar tracks (6) moved by motive means and an assembly of rollers (5) for straightening out the long element (2) unwound from the said cable drum (1).

8. Device as claimed in claim 2, characterised in that the means of sealing (12) comprise a plate (13) adapted to close off the opening of the drilling (10), this plate comprising a passage (15) for the said long element (2), and an element (16) for applying a sealing joint (17) around the long element (2).

9. Device as claimed in claim 8, characterised in that the fluid pumping system (19) is connected to the inside of the drilling (10) by a pipe (18) adapted to an orifice in the plate (13).

10. Device as claimed in claim 9, characterised in that the pipe (18) is provided with valves (20) to cause the inside of the drilling (10) to communicate intermittently with the pumping system (19), the long element (2) comprising openings (23) causing the inside of the long element (2) to communicate with the drilling (10).

11. Device as claimed in claim 2, characterised in that the long element (2) is a semi-rigid tube.

12. Device as claimed in claim 2, characterised in that the long element (2) is a cable.

## Patentansprüche

1. Verfahren zum Vornehmen von Messungen in geologischen Formationen von einem horizontalen oder von einem gegen die Horizontale geneigten Bohrloch aus, durchgeführt in der Wandung einer unterirdischen Strecke (7) mittels einer Meßinstrumente enthaltenden Sonde (11), wobei die Meßinstrumente mit einem Transmissionskabel (22) verbunden sind, dadurch gekennzeichnet, daß es umfaßt: die Befestigung der Sonde (11) an einem länglichen Element (2), das so ausgelegt ist, daß es sich auf einen Speicherhaspel (1) aufwickeln läßt und in dessen Innerem das Transmissionskabel durchläuft; das Einführen der Sonde in das Bohrloch und die Linearverschiebung von der unterirdischen Strecke aus des länglichen vom Speicherhaspel (1) abgewickelten länglichen Element (2), wobei das längliche Element ausreichend steif ist, um die Sonde entlang des Bohrloches zu schleppen; die Durchführung kontinuierlicher Meßzyklen während seiner Verschiebung längs des Bohrloches; und das Wiederaufwickeln des länglichen Elementes auf den Speicherhaspel (1) im Ausmaß des Zurückziehens der Sonde (11).

2. Vorrichtung zur Vornahme von Messungen in geologischen Formationen von einem horizontalen oder gegen die Horizontale gering geneigten Bohrloch (10) aus, ausgeführt in der Wandung einer unterirdischen Strecke (7) mit einer Sonde (11), die so ausgelegt ist, daß sie sich in das Bohrloch einführen läßt, wobei die Sonde mit einem Übertragungskabel (22) verbundene Meßinstrumente enthält, dadurch gekennzeichnet, daß sie ein längliches Element (2) umfaßt, das so ausgebildet ist, daß es auf einen Speicherhaspel (1) sich wickeln läßt, wobei die Sonde an diesem länglichen Element befestigt ist und das Übertragungskabel im Innern hiervon durchläuft; Mitnehmereinrichtungen (4), die zwischen dem kreisförmigen Träger sowie der Öffnung der Bohrung angeordnet sind, um linear im Innern hiervon das längliche vom Speicherhaspel (2) abgewickelte Element sowie die zugeordnete Sonde (11) zu bewegen; Dichtungseinrichtungen (12), die an das Bohrloch (10) anpaßbar sind, um das Innere des Bohrlochs gegen die unterirdische Strecke zu isolieren sowie ein Fluidpumpsystem (19), das das Füllen des Bohrlochs (10) ermöglicht.

3. Vorrichtung nach Anspruch 2, dadurch gekennzeichnet, daß die Mitnehmereinrichtungen (4) eine längs einer gemeinsamen Richtung ausgerichtete Gruppe von Rollen zum Führen des länglichen Elementes sowie Antriebseinrichtungen für den Drehantrieb der Rollen dieser Gruppe umfassen.

4. Vorrichtung nach Anspruch 2, dadurch gekennzeichnet, daß der Speicherhaspel mit sich drehenden Verbindungseinrichtungen versehen ist, um das Übertragungskabel (22) mit äußeren Geräten (24) zu verbinden.

5. Vorrichtung nach Anspruch 4, dadurch gekennzeichnet, daß die sich drehenden Verbindungseinrichtungen einen elektrischen sich drehenden Sammler (36–38) aufweisen, um das Übertragungskabel (22) an ein Kabel (39) anzuschließen, das mit einem elektronischen Steuer- und Aufzeichnungssystem (24) verbunden ist.

6. Vorrichtung nach Anspruch 5, dadurch gekennzeichnet, daß die Verbindungseinrichtungen einen sich drehenden hydraulischen Sammler (26–32) aufweisen, der es ermöglicht, das Innere des länglichen Elementes (2) mit dem Fluidpumpsystem (19) zu verbinden.

7. Vorrichtung nach Anspruch 2, dadurch gekennzeichnet, daß die Mitnehmereinrichtungen durch Antriebseinrichtung bewegte Ketten (6), sowie eine Gruppe von Rollen (5) zum Richten des länglichen von diesen Haspel (1) abgewickelten Element (2) aufweisen.

8. Vorrichtung nach Anspruch 2, dadurch gekennzeichnet, daß die Dichtungseinrichtungen (12) eine Platte (13) umfassen, die so ausgebildet ist, daß sie die Öffnung des Bohrlochs (10) schließt, wobei diese Platte einen Durchgang (15) für dieses längliche Element (2) sowie ein Element (16) zum Anpressen einer Dichtungsausbildung (17) um das längliche Element (2) aufweisen.

9. Vorrichtung nach Anspruch 8, dadurch gekennzeichnet, daß das Fluidpumpsystem (19) mit dem Inneren des Bohrloches (10) über eine in eine Öffnung der Platte (13) passende Leitung (18) verbunden ist.

10. Vorrichtung nach Anspruch 9, dadurch gekennzeichnet, daß die Leitung (18) mit einem Ventil (20) verbunden ist, um intermittierend das Innere des Bohrlochs (10) mit dem Pumpsystem (19) in Verbindung zu setzen, wobei das längliche Element (2) Öffnungen (23) umfaßt, die das Innere des länglichen Elementes (2) mit dem Bohrloch (10) in Verbindung setzen.

11. Vorrichtung nach Anspruch 2, dadurch gekennzeichnet, daß das längliche Element (2) ein halbsteifes Rohr ist.

12. Vorrichtung nach Anspruch 2, dadurch gekennzeichnet, daß das längliche Element (2) ein Kabel ist.

EP 0 242 256 B1

FIG.1

FIG.2

FIG.3

FIG.4